# EUROPÄISCHE PATENTSCHRIFT

(11) **EP 1 629 212 B1**
(45) Veröffentlichungstag und Bekanntmachung des Hinweises auf die Patenterteilung: **05.10.2011**
(21) Anmeldenummer: 04734661.4
(22) Anmeldetag: 25.05.2004
(51) Int. Cl.: F16C 29/06

(54) **LINEARWÄLZLAGER ZUM BERTRAGEN VON DREHMOMENTEN**
LINEAR ROLLING BEARING FOR THE TRANSMISSION OF TORQUES
PALIER A ROULEMENT LINEAIRE POUR LA TRANSMISSION DE COUPLES

(30) Priorität: 30.05.2003 DE 10324480
(43) Veröffentlichungstag der Anmeldung: 01.03.2006
(73) Patentinhaber: Schaeffler Technologies GmbH & Co. KG, 91074 Herzogenaurach (DE)
(72) Erfinder: ZERNICKEL, Alexander, 91074 Herzogenaurach (DE)
(86) Internationale Anmeldenummer: PCT/EP2004/005588
(87) Internationale Veröffentlichungsnummer: WO 2004/106758

(56) Entgegenhaltungen:
- DE-A- 10 150 595
- DE-A- 19 933 875
- US-A- 4 311 348

## Beschreibung

Die vorliegende Erfindung betrifft ein Linearwälzlager zum Übertragen von Drehmomenten. Derartige Linearwälzlager werden in nahezu allen Bereichen des Maschinenbaus und der Kraftfahrzeugtechnik eingesetzt. Mit derartigen Lagern können zueinander längs beweglich verschiebbare Teile gegeneinander gelagert werden. In Anwendungen mit teleskopisch längenveränderlichen Wellen muss ein derartiges Lager zusätzlich die durch die Welle geleiteten Drehmomente übertragen. Teleskopisch längenveränderliche Wellen werden z. B. als Lenkwellen von Lenksäulen moderner Kraftfahrzeuge eingesetzt. Bei derartigen Lenksäulen ist die Position des Lenkrades im Fahrzeuginnenraum der individuellen Größe und Körperhaltung der Bedienperson anpassbar. Damit ändert sich der absolute Abstand des Lenkrades zu dem Lenkgetriebe. Diese Abstandsänderung ist durch zwei teleskopisch verschiebbare ineinander angeordnete Wellenenden korrigierbar.

Aus DE 199 33 875 A1 beispielsweise ist ein Linearwälzlager nach den Merkmalen des Oberbegriffs des Anspruchs 1 bekannt geworden. Die beiden Profilelemente lassen sich einwandfrei in Längsrichtung zueinander verschieben. Dies wird durch die Wälzlagerung erreicht, wobei die Wälzkörper in endlosen Umlaufkanälen umlaufen. Vom Betrag her geringe Drehmomente können zwischen den beiden Profilelementen über die Wälzkörper übertragen werden. Überschreitet jedoch das anliegende Drehmoment einen kritischen Wert, verdrehen die beiden Profilelemente unter Verrichtung von federelastischer Arbeit wenigstens um einen kleinen Verdrehwinkel zueinander, wobei Wandabschnitte beider Profilelemente zur Anlage aneinander kommen. Die Größe des Drehmomentes, das noch über die Wälzkörper übertragen wird, ist durch die Auslegung der einfedernden Elemente bestimmbar. Oberhalb eines kritischen Drehmomentes jedenfalls erfolgt die Übertragung über die erwähnten Kontakte der Wandabschnitte der beiden Profilelemente aneinander. Bei diesem bekannten Linearwälzlager laufen die Wälzkörper in ersten und in zweiten Umlaufkanälen endlos um. Beide Umlaufkanäle weisen einen zur Längsachse parallelen Lastkanal auf, wobei Drehmomente oder radiale Lasten unterhalb des kritischen Drehmomentes über die im Lastkanal angeordneten Wälzkörper zwischen den beiden Profilelementen übertragen werden. Ferner weisen diese Umlaufkanäle einen zur Längsachse parallelen Rücklaufkanal auf, in dem die Wälzkörper lastfrei zurücklaufen. Der Rücklaufkanal und der Lastkanal sind über Umlenkkanäle endlos miteinander verbunden, so dass die Wälzkörper endlos umlaufen können. Die in dem Lastkanal des ersten Umlaufkanals angeordneten Wälzkörper können Drehmomente in einem Drehsinn übertragen. Die in dem Lastkanal des zweiten Umlaufkanals angeordneten Wälzkörper können gegensinnige Drehmomente zwischen den beiden Profilelementen übertragen. Zwar ist durch den Kontakt der Wandabschnitte der beiden Profilelemente aneinander sichergestellt, dass die Wälzkörper der beiden Umlaufkanäle keinen überhöhten Belastungen durch überkritische Drehmomenten ausgesetzt sind. Jedoch ist festzustellen, dass oberhalb des kritischen Drehmomentes eine gleichzeitige relative Verschiebung der beiden Profilelemente zueinander in Längsrichtung nur unter Verrichtung von Reibarbeit möglich ist. Denn im Kontakt der Wandabschnitte ist eine Gleitreibung hervorgerufen, wobei eine Reibkraft abhängig ist von dem anliegenden Drehmoment.

Aufgabe der vorliegenden Erfindung ist es daher, ein Linearwälzlager nach den Merkmalen des Oberbegriffs des Anspruchs 1 anzugeben, bei dem eine relative Verschiebung der beiden Profilelemente in Längsrichtung auch unter Drehmomentbelastung problemlos möglich ist.

Erfindungsgemäß wird diese Aufgabe dadurch gelöst, dass der erste und der zweite Umlaufkanal zur gemeinsamen Übertragung von Drehmomenten ab einem Kritischen Drehmoment derart einander zuschaltbar sind, daß der Rücklaufkanal des jeweils zuschaltbaren Umlaufkanals als Lastkanal und der Lastkanal des jeweils zuschaltbaren Umlaufkanals als Rücklaufkanal verwendet wird.

Bei dem erfindungsgemäßen Linearwälzlager entfällt der Gleitkontakt der Profilelemente bei Drehmomenten oberhalb eines kritischen Drehmomentes. Auch Drehmomente oberhalb des kritischen Drehmomentes werden ausschließlich über die Wälzkörper zwischen den beiden Profilelementen übertragen. Der Trick der Erfindung ist darin zu sehen, dass in beiden Drehsinnen oberhalb des kritischen Drehmomentes die auftretenden Kräfte nicht nur von den Wälzkörpern des ersten oder des zweiten Umlaufkanals übertragen werden, sondern von den Wälzkörpern der beiden Umlaufkanäle. In anderen Worten ausgedrückt kann die Erfindung dadurch beschrieben werden, dass unterhalb eines kritischen Drehmomentes im wesentlichen nur der Lastkanal des ersten oder des zweiten Umlaufkanals zur Übertragung des Drehmomentes vorgesehen ist, wobei oberhalb des kritischen Drehmomentes zusätzlich der Rücklaufkanal des jeweils anderen Umlaufkanals als Lastkanal zur Übertragung dieses Drehmomentes und der Lastkanal dieses anderen Umlaufkanals als Rücklaufkanal vorgesehen ist. Es findet also lediglich eine Umkehrung des Lastkanals und des Rücklaufkanals bei dem zugeschalteten Umlaufkanal statt.

Diese Zuschaltung des ersten oder des zweiten Umlaufkanals zu dem jeweils anderem Umlaufkanal kann auf unterschiedliche Art und Weise bewerkstelligt werden. Bei einer erfindungsgemäß bevorzugten Variante ist ein - wenn auch geringer - Verdrehwinkel der beiden Profilelemente zueinander um die Längsachse herum abhängig von dem anliegenden Drehmoment, wobei oberhalb des kritischen Drehmomentes ein kritischer Verdrehwinkel überschritten ist, unter dem bei dem zugeschalteten Umlaufkanal der Rücklaufkanal als Lastkanal und der Lastkanal als Rücklaufkanal verwendet wird. Unter diesem Verdrehwinkel ändern sich demzufolge die Verhältnisse im Lastkanal und im Rücklaufkanal des zugeschalteten Umlaufkanals, wie weiter unten ausgeführt wird.

In bekannter Weise sind der Lastkanal und der Rücklaufkanal jeweils durch eine dem äußeren Profilelement zugeordnete äußere Laufbahn und durch eine dem inneren Profilelement zugeordnete innere Laufbahn für die Wälzkörper begrenzt. Gleiches gilt auch für die Umlenkkanäle der beiden Profilelemente, die jeweils durch eine dem äußeren Profilelement zugeordnete äußere Umlenkbahn und durch eine dem inneren Profilelement zugeordnete innere Umlenkbahn begrenzt sind.

Ebenfalls in bekannter Weise sind die Wälzkörper im Lastkörper spielfrei in Wälzkontakt mit den den Lastkanal begrenzenden Laufbahnen angeordnet. Auf diese Weise ist sichergestellt, dass kein Drehspiel zwischen den beiden Profilelementen vorhanden ist. Ferner sind die Wälzkörper im Rücklaufkanal mit Spiel zu den den Rücklaufkanal begrenzenden Laufbahnen angeordnet. Dies ist erforderlich, damit die Kugeln möglichst reibungsfrei rückgeführt werden können, um erneut in den Lastkanal umgelenkt zu werden.

Unter der - wenn auch geringen - Verdrehung der beiden Profilelemente zueinander wird erfindungsgemäß das Spiel der Wälzkörper im Rücklaufkanal des zuschaltbaren Umlaufkanals abgebaut. Ferner wird unter der Verdrehung das Spiel der Wälzkörper im Lastkanal des zuschaltbaren Umlaufkanals zu den Laufbahnen aufgebaut. Diese Beeinflussung des Spiels der Wälzkörper in dem Rücklaufkanal und in dem Lastkanal ist möglich bei Anordnungen mit einem ersten und mit einem zweiten Umlaufkanal, wobei der erste Umlaufkanal zur Übertragung von Drehmomenten in dem einen Drehsinn und wobei der andere Umlaufkanal zur Übertragung von Drehmomenten in dem gegensinnigen Drehmoment vorgesehen ist.

Bei einem in technischer und wirtschaftlicher Hinsicht bevorzugten erfindungsgemäßen Linearwälzlager kann das äußere Profilelement einen hohlen Körper und das innere Profilelement eine Welle aufweisen, wobei zwischen dem hohlen Körper und der Welle mehrere über den Umfang verteilt angeordnete Segmente vorgesehen sind, die gemeinsam mit der Welle die Umlaufkanäle begrenzen. Jedes Segment kann mit zwei parallel zueinander angeordneten Laufbahnen und zwei diese Laufbahnen miteinander verbindende Umlenkbahnen versehen sein. Derartige Segmente lassen sich beispielsweise als Stanzteil in preiswerter Weise herstellen. Durch das Vorsehen mehrerer Segmente können auch kleine Relativbewegungen der Segmente in Umfangsrichtung zueinander ermöglicht werden, um innerhalb der zulässigen Toleranzen Verspannungen zwischen den beiden Profilelementen zu vermeiden.

Der hohle Körper kann beispielsweise ein Rohr sein, oder auch eine Hülse oder ein Ring.

Jedes Segment kann an dem hohlen Körper zur Übertragung eines Drehmomentes abgestützt sein. Zu diesem Zweck kann die äußere Laufbahn als Kugelrille an dem Segment an dessen der Welle zugewandten Seite ausgebildet sein, wobei eine konvexe Ausformung des Segmentes an dessen dem hohlen Körper zugewandten Seite ausgebildet ist. Diese konvexe Ausformung des Segmentes kann an einer Anlage des hohlen Körpers zur Übertragung eines Drehmomentes anliegen. Wenn das Segment aus einem wanddickengleichen Blech hergestellt ist, kann die der Welle zugewandte Seite des Bleches mit der Kugelrille versehen sein, die einer konkaven Mulde entspricht, wobei durch diese Einformung der Mulde auf der dem hohlzylindrischen Körper zugewandten Seite des Segmentes die genannte konvexe Ausformung entsteht.

Der hohle Körper kann mit mehreren über den Umfang verteilt angeordneten nach radial innen vorspringenden Einformungen versehen sein, die die Anlagen für die Segmente zur Übertragung eines Drehmomentes bilden.

Vorzugsweise ist die Welle mit mehreren über den Umfang verteilt angeordneten und zur Längsachse parallel angeordneten Zähnen versehen, an denen die Laufbahnen ausgebildet sind. Vorzugsweise sind die Laufbahnen als Kugelrillen ausgebildet.

Einander benachbarte Zähne der Welle begrenzen zwischen sich je einen konvex gewölbten Umfangsabschnitt. Dieser in der Regel teilzylindrische Umfangsabschnitt kann als Umlenkbahn für die Wälzkörper den Umlenkkanal begrenzen.

Der hohle Körper ist erfindungsgemäß in besonders vorteilhafter Weise federelastisch verformbar. Diese Eigenschaft ermöglicht in einfacher Weise die Verdrehung der beiden Profilelemente zueinander, wobei mit dieser Verdrehung eine federelastische Verformung des hohlen Körpers einhergeht. Wenn das Drehmoment wieder entfernt wird, rückverformt sich wieder der hohle Körper, so dass wieder die Ausgangslage erreicht ist.

Eine andere Möglichkeit zur Verwirklichung der Erfindung kann beispielsweise Federelemente vorsehen, die zwischen den Segmenten und dem hohlen Körper angeordnet sind, wobei die Segmente in Umfangsrichtung über die Federelemente von dem hohlen Körper abgestützt sind.

Nachstehend wird die Erfindung anhand eines in insgesamt zwei Figuren abgebildeten Ausführungsbeispieles näher erläutert. Es zeigen:
- Figur 1: einen Querschnitt durch ein erfindungsgemäßes Linear-wälzlager und:
- Figur 2: das erfindungsgemäße Linearwälzlager aus Figur 1, perspektivisch in Explosionsdarstellung.

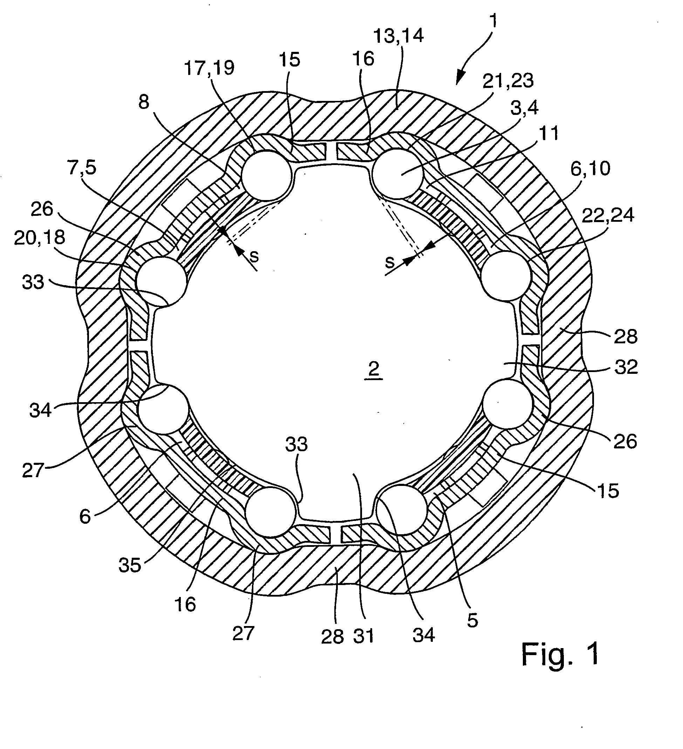

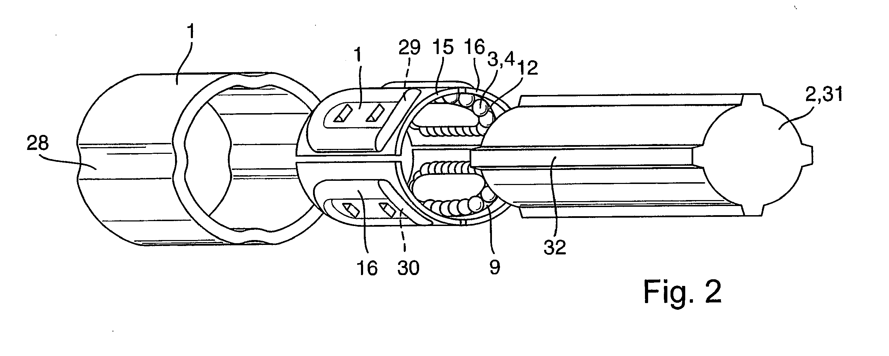

Das in den Figuren 1 und 2 abgebildete erfindungsgemäße Linearwälzlager weist ein äußeres Profilelement 1 und ein inneres Profilelement 2 auf. Zwischen den beiden Profilelementen 1, 2 sind Wälzkörper 3 angeordnet, die vorliegend als Kugeln 4 ausgebildet sind. Die Kugeln 4 laufen in zwei ersten Umlaufkanälen 5 und in zwei zweiten Umlaufkanälen 6 endlos um, wobei sich die beiden ersten Umlaufkanäle 5 und die beiden zweiten Umlaufkanäle 6 diametral gegenüberliegen. Der erste Umlaufkanal 5 umfasst einen zur Längsachse des Linearwälzlagers parallel angeordneten Lastkanal 7, einen ebenfalls zur Längsachse des Linearwälzlagers parallel angeordneten Rücklaufkanal 8 und zwei den Lastkanal 7 mit dem Rücklaufkanal 8 endlos verbindende Umlenkkanäle 9, die deutlich in der Figur 2 erkennbar sind.

Der zweite Umlaufkanal 6 umfasst einen zur Längsachse parallel angeordneten Lastkanals 10, einen parallel zur Längsachse angeordneten Rücklaufkanal 11, und zwei den Lastkanal 10 und den Rücklaufkanal 11 endlos miteinander verbindende Umlenkkanäle 12.

Das äußere Profilelement 1 ist zusammengesetzt aus einem hohlen Körper 13, der vorliegend als Rohr 14 ausgebildet ist, und ferner aus vier über den Umfang verteilt angeordneten Segmenten 15, 16, wobei zwei Segmente 15 dem ersten Umlaufkanal 5 und zwei Segmente 16 dem zweiten Umlaufkanal 6 zugeordnet sind. Der Figur 2 ist deutlich zu entnehmen, dass die Segmente 15, 16 jeweils mit einer endlosen Kugelbahn für die Kugeln 4 versehen sind. An ihren dem inneren Profilelement 2 zugewandten Seiten sind die Segmente 15 mit Laufbahnen 17, 18 versehen, die vorliegend als Kugelrillen 19, 20 ausgebildet sind. Die Kugelrillen 19 begrenzen den Rücklaufkanal 8, und die Kugelrillen 20 begrenzen den Lastkanal, 7. In entsprechender Weise sind die Segmente 16 an ihren dem inneren Profilelement 2 zugewandten Seiten mit Laufbahnen 21, 22 versehen, die vorliegend als Kugelrillen 23, 24 ausgebildet sind. Die Kugelrillen 23 begrenzen den Rücklaufkanal 11 des zweiten Umlaufkanals 6 und die Kugelrillen 24 begrenzen den Lastkanal 7 des zweiten Umlaufkanals 6.

Zwischen dem Lastkanal 7 und dem Rücklaufkanal 8 eines jeden Umlaufkanals 5, 6 ist je eine Kappe 25 angeordnet, die als Verliersicherung für die Kugeln 4 vorgesehen ist. Wenn das äußere Profilelement 1 von dem inneren Profilelement 2 abgezogen wird, können die Kugeln 4 nicht nach innen aus dem äußeren Profilelement 1 herausfallen, da die Kappen 25 die Kugeln 4 unterfangen. Im normalen Betrieb des erfindungsgemäßen Linearwälzlagers sind die Kappen 25 nicht zwingend erforderlich, und könnten auch entfernt werden.

Jedes Segment 15, 16 weist eine ringförmig geschlossene endlose Eindrückung auf, wie sie in Figur 2 in perspektivischer Darstellung an der Außenseite der Segmente 15, 16 erkennbar sind. Diese Eindrückungen bilden an den dem inneren Profilelement 2 zugewandten Seiten die oben beschriebenen Kugelrillen 19, 20, 23, 24. Die Segmente 15, 16 sind in etwa wanddickengleich über ihre gesamte Erstreckung. Demzufolge entsprechend den Eindrückungen an der Innenseite der Segmente 15, 16 konvexe Ausformungen 26, 27, wobei die Ausformungen 26 an den Segmenten 15 und von denen die Ausformungen 27 an den Segmenten 16 ausgebildet sind.

Das Rohr 14 ist mit mehreren über den Umfang verteilt angeordneten, nach radial innen vorspringenden Einformungen 28 versehen, wobei jeweils eine dieser Einformungen 28 zwischen zwei Ausformungen 26, 27 von zwei einander benachbart angeordneten Segmenten 15, 16 angeordnet ist. Der Figur 1 ist deutlich zu entnehmen, dass die Ausformungen 26, 27 in Umfangsrichtung an den Einformungen 28 abgestützt sind.

Der Figur 2 ist deutlich zu entnehmen, dass an den Segmenten 15 durch die genannten Eindrückungen Umlenkbahnen 29 und an den Segmenten 16 Umlenkbahnen 30 für die Kugeln 4 ausgebildet sind, wobei die Umlenkbahnen 29, 30 die Kugelrillen 19, 20, 23, 24 der jeweiligen Segmente 15, 16 endlos miteinander verbinden.

Das innere Profilelement 2 ist vorliegend durch eine Welle 31 gebildet. Diese Welle 31 weist vier über den Umfang verteilt angeordnete Zähne 32 auf, die radial aus der Zylinderfläche der Welle 31 auswärts vorstehen, wobei jeder Zahn 32 parallel zur Längsachse angeordnet und entlang der Welle 31 ausgebildet ist. Je ein Zahn 32 greift zwischen zwei einander benachbart angeordnete erste und zweite Umlaufkanäle 5, 6 ein. Der Figur 1 ist deutlich zu entnehmen, dass von oben beginnend und im Uhrzeigersinn drehend der erste Zahn 32 zwischen zwei Rücklaufkanäle 8, 11 des ersten und des zweiten Umlaufkanals 5, 6 eingreift, dass der nächste Zahn 32 zwischen zwei Lastkanäle 7, 10 des ersten und des zweiten Umlaufkanals 5, 6 eingreift, dass der nächste also unterste Zahn 32 zwischen zwei Rücklaufkanäle 8, 11 und der letzte Zahn 32 wieder zwischen zwei Lastkanäle 7, 10 eingreift.

Zu beiden Längsseiten eines jeden Zahns 32 ist jeweils eine Kugelrille 33, 34 ausgebildet, wobei die Kugelrille 33 dem zweiten Umlaufkanal 6 und wobei die Kugelrille 34 dem ersten Umlaufkanal 5 zugeordnet ist. Die Kugelrillen 33, 34 begrenzen jeweils die Rücklaufkanäle 8, 11 oder die Lastkanäle 7, 10.

Zwei einander benachbart angeordnete Zähne 32 begrenzen je einen zylindrischen Umfangsabschnitt 35 der Welle 31. Dieser zylindrische Umfangsabschnitt 35 begrenzt den Umlenkkanal 9, 12. Die Kugeln 4 wälzen entlang dieses zylindrischen Umfangsabschnitts 35, um vom Rücklaufkanal 8, 11 in den Lastkanal 7, 10 zu gelangen.

In den Lastkanälen 7, 10 sind die Kugeln 4 spielfrei angeordnet. Das bedeutet, dass in den Drehrichtungen kein Spiel zwischen dem äußeren Profilelement 1 und dem inneren Profilelement 2 vorhanden ist.

Das Rohr 14 des äußeren Profilelementes 1 ist derart ausgebildet und dimensioniert, dass es unter einem anliegenden Drehmoment verformbar ist. Nachstehend wird die Wirkungsweise des erfindungsgemäßen Linearwälzlagers anhand der Figur 1 näher erläutert. Zunächst sei angenommen, dass kein Drehmoment anliegt, also kein Drehmoment zwischen den beiden Profilelementen 1, 2 übertragen wird. Eine Längsverschiebung des äußeren Profilelementes 1 gegenüber dem inneren Profilelement 2 erfolgt unter Abwälzen der Kugeln 4 an den Kugelrillen 20, 24, 33, 34 der Lastkanäle 7, 10. Der Figur 1 ist zu entnehmen, dass in den Rücklaufkanälen 8, 11 das Spiel S ausgebildet ist, die Kugeln 4 also einwandfrei zurücklaufen können. Wenn nun beispielsweise in die Welle 31 ein Drehmoment im Uhrzeigersinn eingeleitet wird, so wird dieses Drehmoment von den Kugeln 4 übertragen, die in den Lastkanälen 7 der ersten Umlaufkanäle 5 angeordnet sind. In der Darstellung gemäß Figur 1 sind dies die Kugeln 4 des ersten und dritten Quadranten. Wenn in die Welle 31 ein Drehmoment entgegen dem Uhrzeigersinn eingeleitet wird, so wird dieses Drehmoment von den Kugeln 4 übertragen, die in den Lastkanälen 10 der zweiten Umlaufkanäle 6 angeordnet sind. In der Darstellung gemäß Figur 1 sind dies die Kugeln 4 des zweiten und vierten Quadranten. Sofern die Drehmomente von ihrem Betrag her deutlich unterhalb eines kritischen Wertes bleiben, bleibt die Situation wie in Figur 1 dargestellt weitgehend erhalten. Das bedeutet, dass das Spiel S in den Rücklaufkanälen 8, 11 nach wie vor ausgebildet ist.

Wenn nun in die Welle 31 ein Drehmoment oberhalb eines kritischen Betrages im Uhrzeigersinn eingeleitet wird, werden die entstehenden Kräfte zwar nach wie vor über die Kugeln 4 von der Welle 31 in das Rohr 14 eingeleitet. Jedoch sind die auftretenden Kräfte im Kontakt der konvexen Ausformungen 26 der Segmente 15 mit den Einformungen 28 des Rohres 14 vom Betrag her so groß, dass das Rohr 14 unter dieser Kraft nach außen elastisch nachgibt. Im weiteren Verlauf findet demzufolge eine - wenn auch geringe - Relativdrehung der Welle 31 im Uhrzeigersinn gegenüber dem Rohr 14 statt. Als Folge dieser relativen Verdrehung reduziert sich das Spiel S in den Rücklaufkanälen 11 der zweiten Umlaufkanäle 6, in dem zweiten und vierten Quadranten. Gleichzeitig entsteht ein Spiel für die Kugeln 4 in den Lastkanälen 10 des zweiten Umlaufkanals 6. In der Figur 1 sind dies die Kugeln 4 in den Lastkanälen 10 im zweiten und vierten Quadranten. Schließlich ist das Spiel S im Rücklaufkanal 11 des zweiten Umlaufkanals 6 aufgehoben und die Kugeln 4 sind unter Last zwischen den Kugelrillen 34 der Welle 31 einerseits und den Kugelrillen 23 der Segmente 16 andererseits eingespannt. In dieser Situation wird das Drehmoment demzufolge von den Kugeln 4 sämtlicher Umlaufkanäle 5, 6 übertragen. Oberhalb des kritischen Drehmomentes sind demzufolge bei dem zugeschalteten zweiten Umlaufkanal 6 die Anordnung des Rücklaufkanals 8, 11 und des Lastkanals 7, 10 vertauscht. Diese Vertauschung tritt unter Verdrehung der beiden Profilelemente 1, 2 zueinander ein, wobei ein ursprünglich ausgebildetes Spiel in den Rücklaufkanälen 8, 11 aufgehoben wird und dagegen ein Spiel in den Lastkanälen 7, 10 eingeräumt wird.

In entsprechender Weise können selbstverständlich Drehmomente oberhalb eines kritischen Betrages entgegengesetzt dem Uhrzeigersinn in die Welle 31 eingeleitet werden, wobei eine entsprechende Umkehrung der Lastkanäle und Rücklaufkanäle der zugeschalteten Umlaufkanäle erfolgt.

**Bezugszahlen**
- 1: äußeres Profilelement
- 2: inneres Profilelement
- 3: Wälzkörper
- 4: Kugeln
- 5: erster Umlaufkanal
- 6: zweiter Umlaufkanal
- 7: Lastkanal
- 8: Rücklaufkanal
- 9: Umlenkkanal
- 10: Lastkanal
- 11: Rücklaufkanal
- 12: Umlenkkanal
- 13: hohler Körper
- 14: Rohr
- 15: Segment
- 16: Segment
- 17: Laufbahn
- 18: Laufbahn
- 19: Kugelrille
- 20: Kugelrille
- 21: Laufbahn
- 22: Laufbahn
- 23: Kugelrille
- 24: Kugelrille
- 25: Kappe

- 26: Ausformung
- 27: Ausformung
- 28: Einformung
- 29: Umlenkbahn
- 30: Umlenkbahn
- 31: Welle
- 32: Zahn
- 33: Kugelrille
- 34: Kugelrille
- 35: zylindrischer Umfangsabschnitt

## Patentansprüche

1. Linearwälzlager zum Übertragen von Drehmomenten um seine Längsachse, mit einem inneren Profilelement (2) und einem das innere Profilelement (2) zumindest teilweise umschließenden äußeren Profilelement (1), wobei die beiden Profilelemente (1, 2) über Wälzkörper (3) in Längsrichtung zueinander verschiebbar gelagert sind, welche Wälzkörper (3) in wenigstens einem ersten und in wenigstens einem zweiten endlosen Umlaufkanal (5, 6) endlos umlaufen, wobei der Umlaufkanal (5, 6) einen zur Längsachse parallelen Lastkanal (7, 10), einen zur Längsachse parallelen Rücklaufkanal (8, 11) und zwei den Lastkanal (7, 10) und den Rücklaufkanal (8, 11) endlos miteinander verbindende Umlenkkanäle (9, 12) aufweist, wobei die im Lastkanal (7) des ersten Umlaufkanals (5) angeordneten Wälzkörper (3) zur Übertragung eines Drehmomentes zwischen den beiden Profilelementen (1, 2) vorgesehen sind, und wobei die im Lastkanal (10) des zweiten Umlaufkanals (6) angeordneten Wälzkörper (3) zur Übertragung eines gegensinnigen Drehmomentes zwischen den beiden Profilelementen (1, 2) vorgesehen sind, **dadurch gekennzeichnet, daß** der erste und der zweite Umlaufkanal (5, 6) zur gemeinsamen Übertragung von Drehmomenten ab einem Kritischen Drehmoment derart einander zuschaltbar sind, daß der Rücklaufkanal (8, 11) des jeweils zuschaltbaren Umlaufkanals (5, 6) als Lastkanal und der Lastkanal (7, 10) des jeweils zuschaltbaren Umlaufkanals (5, 6) als Rücklaufkanal verwendet wird.

2. Linearwälzlager nach den Merkmalen des Oberbegriffs des Anspruchs 1, bei dem unterhalb eines kritischen Drehmomentes im wesentlichen nur der Lastkanal (7, 10) des ersten oder des zweiten Umlaufkanals (5, 6) zur Übertragung des Drehmomentes vorgesehen ist, wobei oberhalb des kritischen Drehmomentes zusätzlich der Rücklaufkanal (8, 11) des jeweils anderen Umlaufkanals (5, 6) als Lastkanal zur Übertragung dieses Drehmomentes und der Lastkanal (7, 10) dieses anderen Umlaufkanals (5, 6) als Rücklaufkanal vorgesehen ist.

3. Linearwälzlager nach Anspruch 1 oder 2, bei dem ein Verdrehwinkel der beiden Profilelemente (1, 2) zueinander um die Längsachse herum abhängig ist von dem anliegenden Drehmoment, wobei oberhalb des kritischen Drehmomentes ein kritischer Verdrehwinkel überschritten ist, unter dem bei dem zugeschalteten Umlaufkanal (5, 6) der Rücklaufkanal (8, 11) als Lastkanal und der Lastkanal (7, 10) als Rücklaufkanal verwendet wird.

4. Linearwälzlager nach Anspruch 1, bei dem der Lastkanal (7, 10) und der Rücklaufkanal (8, 11) jeweils durch eine dem äußeren Profilelement (1) zugeordnete äußere Laufbahn (17, 18, 21, 22) und durch eine dem inneren Profilelement (2) zugeordnete innere Laufbahn (33, 34) für die Wälzkörper (3) begrenzt ist.

5. Linearwälzlager nach Anspruch 1, bei dem der Umlenkkanal (9, 12) durch eine dem äußeren Profilelement (1) zugeordnete äußere Umlenkbahn (29, 30) und durch eine dem inneren Profilelement (2) zugeordnete innere Umlenkbahn (35)begrenzt ist.

6. Linearwälzlager nach Anspruch 4, bei dem die Wälzkörper (3) im Rücklaufkanal (8, 11) mit Spiel S zu den den Rücklaufkanal (8, 11) begrenzenden Laufbahnen (17, 21, 33, 34) angeordnet sind.

7. Linearwälzlager nach Anspruch 4, bei dem die Wälzkörper (3) im Lastkanal (7, 10) spielfrei in Wälzkontakt mit den den Lastkanal (7, 10) begrenzenden Laufbahnen (18, 22, 33, 34) angeordnet sind.

8. Linearwälzlager nach Anspruch 6, bei dem unter einer Verdrehung der beiden Profilelemente (1, 2) zueinander das Spiel der Wälzkörper im Rücklaufkanal (8, 11) des zuschaltbaren Umlaufkanals (5, 6) abgebaut wird.

9. Linearwälzlager nach Anspruch 7, bei dem unter einer Verdrehung der beiden Profilelemente (1, 2) zueinander das Spiel der Wälzkörper (3) im Lastkanal (7, 10) des zuschaltbaren Umlaufkanals (5, 6) zu den Laufbahnen (33, 34, 18, 22) zunimmt.

10. Linearwälzlager nach Anspruch 1, bei dem das äußere Profilelement (1) einen hohler Körper (13) und das innere Profilelement (2) eine Welle (31) aufweist, wobei zwischen dem hohlen Körper (13) und der Welle (31) mehrere über den Umfang verteilt angeordnete Segmente (15, 16) vorgesehen sind, die gemeinsam mit der Welle (31) die Umlaufkanäle (4, 5) begrenzen.

11. Linearwälzlager nach Anspruch 10, bei dem jedes Segment (15, 16) mit den zwei parallel zueinander angeordneten äußeren Laufbahnen (17, 18) und zwei diese Laufbahnen (17, 18) miteinander verbindende Umlenkbahnen (29, 30) versehen ist.

12. Linearwälzlager nach Anspruch 10, bei dem das Segment (15, 16) an dem hohlen Körper (13) zur Übertragung eines Drehmomentes abgestützt ist.

13. Linearwälzlager nach Anspruch 11, bei dem die äußere Laufbahn (17, 18) als Kugelrille (19, 20, 23, 24) an dem Segment (15, 16) an dessen der Welle (31) zugewandten Seite ausgebildet ist, wobei eine konvexe Ausformung (26, 27) des Segmentes (15, 16) an dessen dem hohlen Körper (13) zugewandten Seite ausgebildet ist.

14. Linearwälzlager nach Anspruch 13, bei dem die Ausformung (26, 27) des Segmentes (15, 16) an einer Anlage des hohlen Körpers (13) zur Übertragung eines Drehmomentes anliegen.

15. Linearwälzlagers nach Anspruch 14, bei dem der hohle Körper (13) mit mehreren über den Umfang verteilt angeordneten nach radial innen vorspringenden Einformungen (28) versehen ist, die Anlagen für die Segmente (15, 16) zur Übertragung eines Drehmomentes bilden.

16. Linearwälzlager nach Anspruch 10, bei dem die Welle (31) mehrere über den Umfang verteilt angeordnete und zur Längsachse parallel angeordnete Zähne (32) aufweist, an denen die Laufbahnen (33, 34) ausgebildet sind.

17. Linearwälzlager nach Anspruch 16, bei dem einander benachbarte Zähne (32) zwischen sich je einen konvex gewölbten Umfangsabschnitt (35) der Welle (31) begrenzen.

18. Linearwälzlager nach Anspruch 17, bei dem der Umfangsabschnitt (35) als Umlenkbahn für die Wälzkörper (3) den Umlenkkanal (5, 6) begrenzt.

19. Linearwälzlager nach Anspruch 10, bei dem der hohle Körper (13) federelastisch verformbar ist.

## Claims

1. Linear rolling bearing for transmitting torques about its longitudinal axis, having an inner profile element (2) and an outer profile element (1) which surrounds the inner profile element (2) at least partially, the two profile elements (1, 2) being mounted via rolling bodies (3) such that they can be displaced with respect to one another in the longitudinal direction, which rolling bodies (3) circulate endlessly in at least one first circulatory channel (5) and in at least one second circulatory channel (6), the circulatory channel (5, 6) having a loadbearing channel (7, 10) which is parallel to the longitudinal axis, a return channel (8, 11) which is parallel to the longitudinal axis, and two deflection channels (9, 12) which connect the loadbearing channel (7, 10) and the return channel (8, 11) to one another in an endless manner, the rolling bodies (3) which are arranged in the loadbearing channel (7) of the first circulatory channel (5) being provided for transmitting a torque between the two profile elements (1, 2), and the rolling bodies (3) which are arranged in the loadbearing channel (10) of the second circulatory channel (6) being provided to transmit a torque in the opposite direction between the two profile elements (1, 2), **characterized in that** the first circulatory channel (5) and the second circulatory channel (6) can be connected to one another for jointly transmitting torques above a critical torque in such a way that the return channel (8, 11) of the circulatory channel (5, 6) which can be respectively connected is used as a loadbearing channel and the loadbearing channel (7, 10) of the circulatory channel (5, 6) which can be respectively connected being used as a return channel.

2. Linear rolling bearing according to the features of the precharacterizing clause of Claim 1, in which substantially only the loadbearing channel (7, 10) of the first or second circulatory channel (5, 6) is provided below a critical torque for transmitting the torque, the return channel (8, 11) of the respective other circulatory channel (5, 6) being provided additionally above the critical torque as a loadbearing channel for transmitting this torque, and the loadbearing channel (7, 10) of said other circulatory channel (5, 6) being provided as a return channel.

3. Linear rolling bearing according to Claim 1 or 2, in which a rotational angle of the two profile elements (1, 2) with respect to one another about the longitudinal axis is a function of the prevailing torque, a critical rotational angle being exceeded above the critical torque, at which critical rotational angle the return channel (8, 11) is used as a loadbearing channel and the loadbearing channel (7, 10) is used as a return channel in the circulatory channel (5, 6) which is connected.

4. Linear rolling bearing according to Claim 1, in which the loadbearing channel (7, 10) and the return channel (8, 11) are delimited in each case by an outer raceway (17, 18, 21, 22) for the rolling bodies (3), which outer raceway (17, 18, 21, 22) is assigned to the outer profile element (1), and by an inner raceway (33, 34) for the rolling bodies (3), which inner raceway (33, 34) is assigned to the inner profile element (2).

5. Linear rolling bearing according to Claim 1, in which the deflection channel (9, 12) is delimited by an outer deflection track (29, 30) which is assigned to the outer profile element (1) and by an inner deflection track (35) which is assigned to the inner profile element (2).

6. Linear rolling bearing according to Claim 4, in which the rolling bodies (3) are arranged in the return channel (8, 11) with play S with respect to the raceways (17, 21, 33, 34) which delimit the return channel (8, 11).

7. Linear rolling bearing according to Claim 4, in which the rolling bodies (3) are arranged without play in the loadbearing channel (7, 10), in roller contact with the raceways (18, 22, 33, 34) which delimit the loadbearing channel (7, 10).

8. Linear rolling bearing according to Claim 6, in which the play of the rolling bodies in the return channel (8, 11) of the circulatory channel (5, 6) which can be connected is reduced during a rotation of the two profile elements (1, 2) with respect to one another.

9. Linear rolling bearing according to Claim 7, in which the play of the rolling bodies (3), with respect to the raceways (33, 34, 18, 22), in the loadbearing channel (7, 10) of the circulatory channel (5, 6) which can be connected increases during a rotation of the two profile elements (1, 2) with respect to one another.

10. Linear rolling bearing according to Claim 1, in which the outer profile element (1) has a hollow body (13) and the inner profile element (2) has a shaft (31), a plurality of segments (15, 16) which are distributed over the circumference and delimit the circulatory channels (5, 6) together with the shaft (31) being provided between the hollow body (13) and the shaft (31).

11. Linear rolling bearing according to Claim 10, in which every segment (15, 16) is provided with the two outer raceways (17, 18) which are arranged parallel to one another, and with two deflection tracks (29, 30) which connect said raceways (17, 18) to one another.

12. Linear rolling bearing according to Claim 10, in which the segment (15, 16) is supported on the hollow body (13) in order to transmit a torque.

13. Linear rolling bearing according to Claim 11, in which the outer raceway (17, 18) is configured as a ball groove (19, 20, 23, 24) on that side of the segment (15, 16) which faces the shaft (31), a convex shaped-out molding (26, 27) of the segment (15, 16) being formed on its side which faces the hollow body (13).

14. Linear rolling bearing according to Claim 13, in which the shaped-out molding (26, 27) of the segment (15, 16) bears against a rest of the hollow body (13) in order to transmit a torque.

15. Linear rolling bearing according to Claim 14, in which the hollow body (13) is provided with a plurality of shaped recesses (28) which are distributed over the circumference, project radially inwardly and form rests for the segments (15, 16) in order to transmit a torque.

16. Linear rolling bearing according to Claim 10, in which the shaft (31) has a plurality of teeth (32) which are distributed over the circumference, are arranged parallel to the longitudinal axis and on which the raceways (33, 34) are formed.

17. Linear rolling bearing according to Claim 16, in which teeth (32) which are adjacent to one another delimit in each case a convexly curved circumferential section (35) of the shaft (31) between them.

18. Linear rolling bearing according to Claim 17, in which the circumferential section (35) delimits the deflection channel (9, 12), as deflection track for the rolling bodies (3).

19. Linear rolling bearing according to Claim 10, in which the hollow body (13) can be deformed resiliently.

## Revendications

1. Palier à roulement linéaire pour la transmission de couples autour de son axe longitudinal, comprenant un élément profilé intérieur (2), et un élément profilé extérieur (1) entourant au moins en partie l'élément profilé intérieur (2), les deux éléments profilés (1, 2) étant montés de manière déplaçable l'un par rapport à l'autre dans la direction longitudinale par le biais de corps de roulement (3), lesquels corps de roulement (3) tournent sans fin dans au moins un premier et au moins un deuxième canal périphérique sans fin (5, 6), le canal périphérique (5, 6) présentant un canal de charge (7, 10) parallèle à l'axe longitudinal, un canal de retour (8, 11) parallèle à l'axe longitudinal et deux canaux de renvoi (9, 12) reliant le canal de charge (7, 10) et le canal de retour (8, 11) sans fin l'un à l'autre, les corps de roulement (3) disposés dans le canal de charge (7) du premier canal périphérique (5) étant prévus pour le transfert d'un couple entre les deux éléments profilés (1, 2), et les corps de roulement (3) disposés dans le canal de charge (10) du deuxième canal périphérique (6) étant prévus pour le transfert d'un couple en sens inverse entre les deux éléments profilés (1, 2), **caractérisé en ce que** le premier et le deuxième canal périphérique (5, 6) peuvent être raccordés l'un à l'autre pour le transfert commun de couples à partir d'un couple critique, de telle sorte que le canal de retour (8, 11) du canal périphérique respectif (5, 6) pouvant être raccordé est utilisé comme canal de charge et le canal de charge (7, 10) du canal périphérique respectif (5, 6) pouvant être raccordé est utilisé comme canal de retour.

2. Palier à roulement linéaire selon les caractéristiques du préambule de la revendication 1, dans lequel, en dessous d'un couple critique, essentiellement seulement le canal de charge (7, 10) du premier ou du deuxième canal périphérique (5, 6) est prévu pour le transfert de couple, et au-dessus du couple critique, le canal de retour (8, 11) de l'autre canal périphérique respectif (5, 6) est en outre prévu en tant que canal de charge pour le transfert de ce couple et le canal de charge (7, 10) de cet autre canal périphérique (5, 6) est prévu en tant que canal de retour.

3. Palier à roulement linéaire selon la revendication 1 ou 2, dans lequel un angle de rotation des deux éléments profilés (1, 2) l'un par rapport à l'autre autour de l'axe longitudinal dépend du couple appliqué, et au-dessus du couple critique, un angle de rotation critique est dépassé, en dessous duquel, lorsque le canal périphérique (5, 6) est raccordé, le canal de retour (8, 11) est utilisé comme canal de charge et le canal de charge (7, 10) est utilisé comme canal de retour.

4. Palier à roulement linéaire selon la revendication 1, dans lequel le canal de charge (7, 10) et le canal de retour (8, 11) sont chacun limités par une piste de roulement extérieure (17, 18, 21, 22) associée à l'élément profilé extérieur (1), et par une piste de roulement intérieure (33, 34) pour les corps de roulement (3), associée à un élément profilé intérieur (2).

5. Palier à roulement linéaire selon la revendication 1, dans lequel le canal de renvoi (9, 12) est limité par une piste de renvoi extérieure (29, 30) associée à l'élément profilé extérieur (1) et par une piste de renvoi intérieure (35) associée à l'élément profilé intérieur (2).

6. Palier à roulement linéaire selon la revendication 4, dans lequel les corps de roulement (3) sont disposés dans le canal de retour (8, 11) avec un jeu S par rapport aux pistes de roulement (17, 21, 33, 34) limitant le canal de retour (8, 11).

7. Palier à roulement linéaire selon la revendication 4, dans lequel les corps de roulement (3) sont disposés dans le canal de charge (7, 10) sans jeu en contact de roulement avec les pistes de roulement (18, 22, 33, 34) limitant le canal de charge (7, 10).

8. Palier à roulement linéaire selon la revendication 6, dans lequel le jeu des corps de roulement dans le canal de retour (8, 11) du canal périphérique (5, 6) pouvant être raccordé est réduit par une rotation des deux éléments profilés (1, 2) l'un par rapport à l'autre.

9. Palier à roulement linéaire selon la revendication 7, dans lequel le jeu des corps de roulement (3) dans le canal de charge (7, 10) du canal périphérique (5, 6) pouvant être raccordé par rapport aux pistes de roulement (33, 34, 18, 22) augmente par une rotation des deux éléments profilés (1, 2) l'un par rapport à l'autre.

10. Palier à roulement linéaire selon la revendication 1, dans lequel l'élément profilé extérieur (1) présente un corps creux (13) et l'élément profilé intérieur (2) présente un arbre (31), plusieurs segments (15, 16) disposés de manière répartie sur la périphérie étant prévus entre le corps creux (13) et l'arbre (31), lesquels limitent conjointement avec l'arbre (31) les canaux périphériques (5, 6).

11. Palier à roulement linéaire selon la revendication 10, dans lequel chaque segment (15, 16) est pourvu des deux pistes de roulement extérieures (17, 18) disposées parallèlement l'une à l'autre et de deux pistes de renvoi (29, 30) reliant l'une à l'autre ces pistes de roulement (17, 18).

12. Palier à roulement linéaire selon la revendication 10, dans lequel le segment (15, 16) est supporté sur le corps creux (13) en vue du transfert d'un couple.

13. Palier à roulement linéaire selon la revendication 11, dans lequel la piste de roulement extérieure (17, 18) est réalisée sous forme de gorge à billes (19, 20, 23, 24) sur le segment (15, 16) au niveau de son côté tourné vers l'arbre (31), une formation en saillie convexe (26, 27) du segment (15, 16) étant réalisée sur son côté tourné vers le corps creux (13).

14. Palier à roulement linéaire selon la revendication 13, dans lequel la formation en saillie (26, 27) du segment (15, 16) s'applique sur un appui du corps creux (13) en vue du transfert d'un couple.

15. Palier à roulement linéaire selon la revendication 14, dans lequel le corps creux (13) est pourvu de plusieurs formations en retrait (28) saillant radialement vers l'intérieur disposées de manière répartie sur la périphérie, qui forment les appuis pour les segments (15, 16) pour le transfert d'un couple.

16. Palier à roulement linéaire selon la revendication 10, dans lequel l'arbre (31) présente plusieurs dents (32) disposées de manière répartie sur la périphérie, et disposées parallèlement à l'axe longitudinal, sur lesquelles sont réalisées les pistes de roulement (33, 34).

17. Palier à roulement linéaire selon la revendication 16, dans lequel des dents (32) mutuellement adjacentes limitent entre elles une portion périphérique de courbure convexe (35) de l'arbre (31).

18. Palier à roulement linéaire selon la revendication 17, dans lequel la portion périphérique (35) limite le canal de renvoi (9, 12) en tant que piste de renvoi pour les corps de roulement (3).

19. Palier à roulement linéaire selon la revendication 10, dans lequel le corps creux (13) peut être déformé élastiquement par ressort.
